Europäisches Patentamt

European Patent Office

Office européen des brevets

(11) Publication number: **0 379 844**
**A2**

## (12) EUROPEAN PATENT APPLICATION

(21) Application number: **89830173.4**

(22) Date of filing: **21.04.89**

(51) Int. Cl.⁵: **B29C 51/16, B29C 63/02**

(30) Priority: **27.01.89 IT 60389**

(43) Date of publication of application:
**01.08.90 Bulletin 90/31**

(84) Designated Contracting States:
**AT BE CH DE ES FR GB GR LI LU NL SE**

(71) Applicant: **GAROFOLI - S.p.A.**
**Via Recanatese, 37**
**I-60022 Castelfidardo (AN)(IT)**

(72) Inventor: **Garofoli, Fernando**
**Via Monticelli, 2**
**I-60022 - Castelfidardo (An)(IT)**

(74) Representative: **Baldi, Claudio**
**Piazza Ghislieri, 3**
**I-60035 Jesi (Ancona)(IT)**

(54) **Industrial process for the synthetic veneering of panels.**

(57) This invention relates to an industrial process for the synthetic veneering of panels characterized in that the polymeric laminate film is heated in a closed press by means of a heating plate against which the film is pressed and held by compressed air for the time required to soften the film, after which by inverting the air flow, the softened film is pressed over the panel to be covered.

FIG. 1

EP 0 379 844 A2

## Industrial process for the synthetic veneering of panels

This application for a design patent relates to a new industrial process for carrying out perfect synthetic veneering of furniture panels.

As is commonly known in the furniture manufacturing industry, synthetic veneering is the operation by which a panel is covered externally with a polymeric laminate film, which may, as necessary, be smooth or printed with patterns imitating the grain or the porosity of a particular type of wood.

The film is made to adhere to the panel side to be veneered using a layer of special glue which is applied to the surface of the panel to be covered.

The actual covering phase, during which the film is pressed and adheres to the side of the panel, must be carried out after the film has been heated at a temperature which softens the same, so that the film may be shaped under pressure and adheres to any shape of the panel below.

If on one hand heating the polymeric laminate film is necessary to ensure that the softened film can copy the shape of the panel perfectly, on the other it should be recalled that the glue applied previously to the panel must also be heated to return it to its fluid state so that it binds efficiently in a uniform and stable manner.

Currently the polymeric laminate film is heated to softening temperature by means of a set of electrical heating elements fitted between the film and the underlying panel to be covered, supported on the mobile surface of a press.

On reaching the softening temperature of the film these electrical heating elements are removed quickly from the side allowing the press to be closed immediately with the introduction of compressed air on the back of the film which is in this way pushed pneumatically against the underlying panel.

It is easy to understand that as quickly as the removal of the electrical heating elements, the closing of the press and the introduction of compressed air may be carried out in sequence, the seconds required to complete these operations are sufficient to allow the film to cool, with a consequent stiffening of those peripheral parts, such as the edges, where the loss of heat of the outside tends to be greater.

In fact, the film adhering to the panel is no longer uniformly heated and it hardens just enough to loose the plasticity required for shaping perfectly to the concave or convex forms of the underlying panel.

It is for this reason that the most critical points are the corners of the panel where creases will appear if the film is not perfectly softened, or the edges of the panel where the film is bent to a right angle.

It is also clear that uneven cooling of the film will result in uneven, and at times, insufficient tempering of the layer of glue previously applied to the panel, making it difficult for the film to adhere to the same, above all at the critical points mentioned above.

The object of this invention is to develop a new industrial process for the snythetic veneering of panels which eliminates the above problems, resulting mainly from excessive dispersion of heat by the film from the time the softening temperature has been reached by the same to the time in which the film is pressed against the panel to be covered.

In the industrial process according to the invention, in order to reduce this interval of time, the film is heated to the softening temperature in a closed press, namely with the film already applied over the panel to be covered.

The film is in fact applied over the panel and under a heating plate, which in the preferred embodiment of the invention is the side of a radiator in which oil at a high temperature circulates.

By introducing air at low pressure into the compartment in which the panel is supported and housed, the panel can be lifted sufficiently to touch the heating plate above, to which it adheres for the time required for the film to soften uniformly.

At this point it is sufficient to introduce compressed air between the heating plate and the softened film and to discharge the air previously introduced under the film so as to instantaneously press the softened film pneumatically over the panel to be covered.

In the process according to the invention, once the film has reached the softening temperature, the time required to press the film against the panel is practically nil.

For major clarity the description of the invention proceeds with reference to the enclosed drawings used descriptively rather than in a limiting sense, in which:

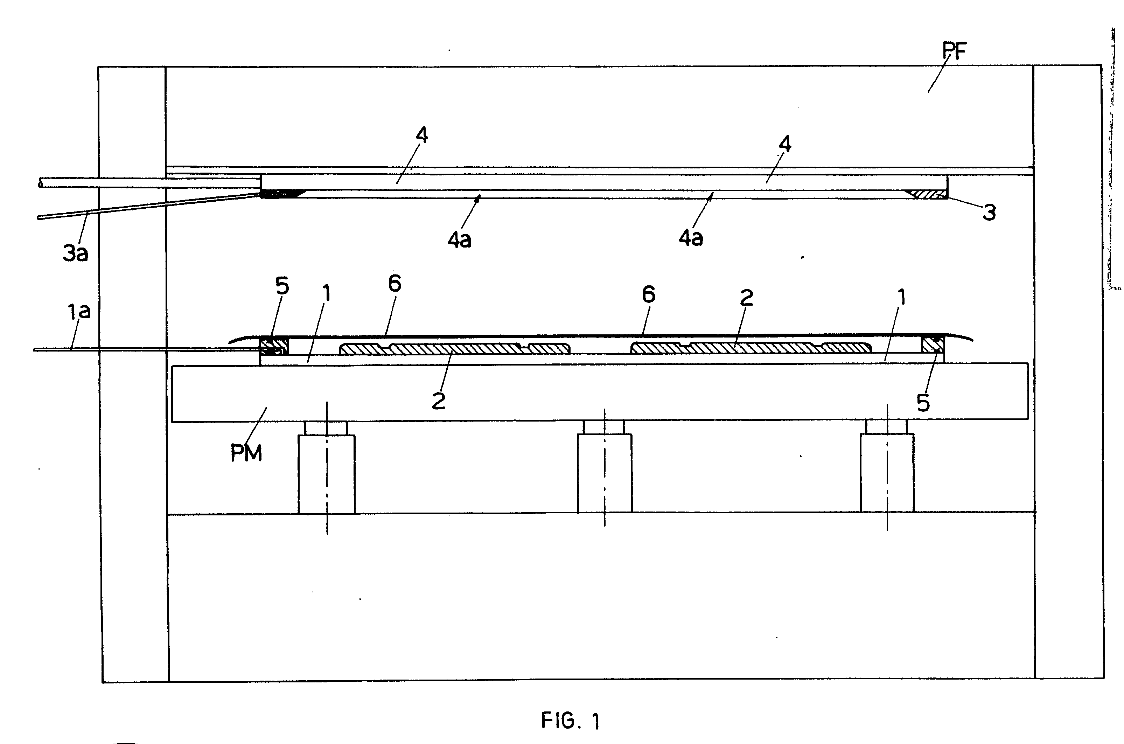

- figs. 1, 2 and 3 are a schematic representation of the various operating phases in the correct sequence, of the industrial process according to the invention.

In order to carry out the industrial process in question it is necessary to have a hollowed surface (1) in which to place the panels to be covered (2) and in which air at a low pressure of about 0.5/1 atm. can be introduced through appropriate ducting (1a).

A hollowed counter-surface (3) is also required in which to house an oil radiator (4) with the introduction of air at a high pressure of about 4 - 8 atm. through appropriate ducting.

The sizes of the hollowed surface (1) and of the hollowed counter-surface (3) must ensure that when these are placed next to each other the respective edges will match, so as to create an internal air tight chamber thanks to perimetral gaskets (5) on the edges of the hollowed surface (1).

The hollowed surface (1) and the hollowed counter-surface (3) are fixed respectively to the mobile surface (PM) and to the fixed surface (PF) of a standard press, as indicated in fig. 1.

The first operating phase involves loading the panels (2) in the hollowed surface and subsequent loading of the film (6) which rests on the above perimetral gaskets (5).

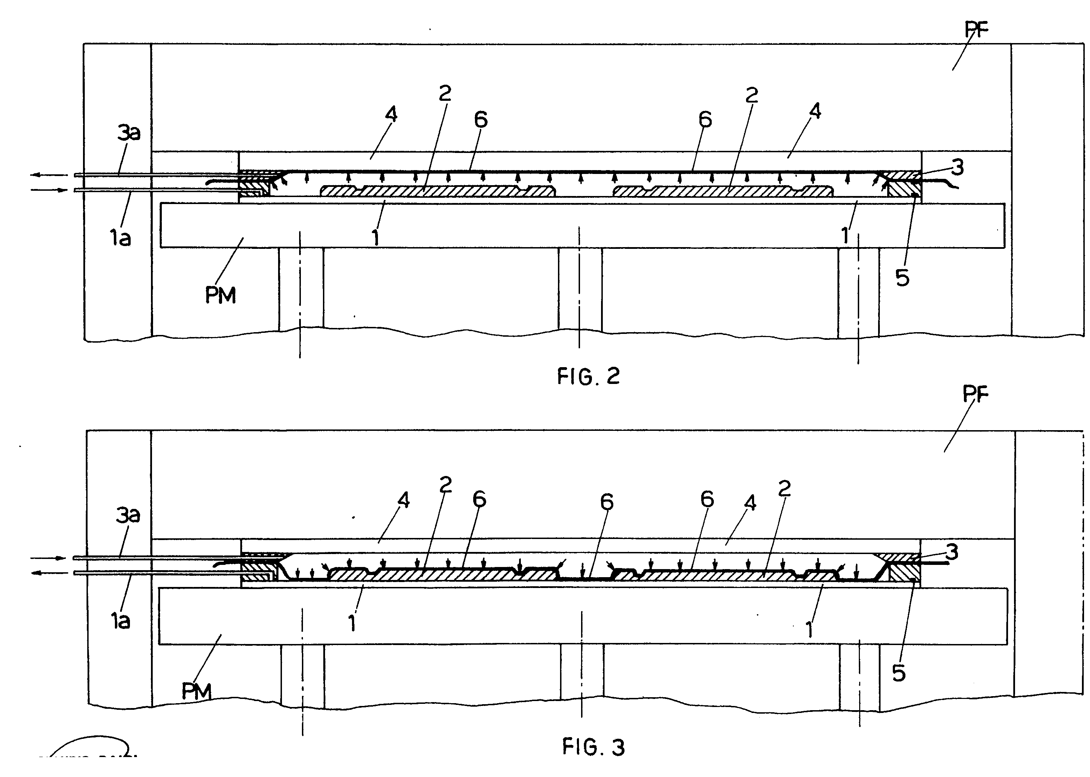

After lifting the mobile surface (PM) of the press so that the hollowed surface (1) abuts under the hollowed counter-surface (3), as indicated in fig. 2, air is introduced into the chamber of the hollowed surface (1), so that the air pressure lifts the film (6) making it adhere to the hot side (4a) of the oil radiator (4), housed in the hollowed counter-surface (3).

On reaching the softening temperature of the film (6), air is discharged from the chamber of the hollowed surface (1) and air is introduced at the same time into the chamber of the counter-surface (3) so that the film (6) is drawn immediately away from the side (4a) of the radiator (4) and pressed down over the panels (2) on which the film (6) is shaped to copy the profiles of the panels (2) perfectly.

It is evident that without going beyond the scope of this invention, instead of introducing compressed air first under and then immediately afterwards over the film (6), a vacuum may be created first over and then immediately afterwards under the film (6), without compromising the results in any way.

## Claims

Industrial process for the synthetic veneering of panels characterized by the following operating phases:

a) the loading of panels (2) in a hollowed surface (1), fixed over the mobile surface (PM) of a standard press;

b) the loading of the film (6) over the hollowed surface (1);

c) the lifting of the mobile surface (PM) of the press to abut the hollowed surface (1) under a hollowed counter-surface (3) which houses a heating plate (4a) and is fitted under the fixed surface (PF) of a standard press;

d) the introduction of air at low pressure into the chamber of the hollowed surface (1) for the time required to soften the film (6) which is then lifted and made to adhere under pressure against the above heating plate (4a);

e) the introduction of air at high pressure into the chamber of the hollowed counter-surface (3) and simultaneous discharging of the air previously introduced into the chamber of the hollowed surface (1).

2) Industrial process for the synthetic veneering of panels, according to claim 1), characterized in that the hollowed surface (1) is fitted with an internal ducting (1a) for introducing and discharging the compressed air.

3) Industrial process for the synthetic veneering of panels according to claim 1) characterized in that the hollowed counter-surface (3) is fitted with internal ducting(3a) for introducing and discharging the compressed air.

4) Industrial process for the synthetic veneering of panels according to claim 1), characterized in that the heating plate (4a) may be the side of an oil radiator (4).

5) Panels covered with a polymeric laminate characterized in that these are obtained with the process according to the above claims.

FIG. 1

EP 0 379 844 A2

FIG. 2

FIG. 3

EP 0 379 844 A2